# EUROPEAN PATENT SPECIFICATION

(11) **EP 0 733 823 B1**
(45) Date of publication and mention of the grant of the patent: **28.02.2001**
(21) Application number: 96103945.0
(22) Date of filing: 13.03.1996
(51) Int. Cl.: F16F 9/36

(54) **A stem guide and seal unit, particularly for a shock absorber stem**
Führung und Abdichtung für eine Kolbenstange, insbesondere für Stossdämpfer
Guidage et joint pour une tige, en particulier une tige d'amortisseur

(30) Priority: 24.03.1995 IT TO950225
(43) Date of publication of application: 25.09.1996
(73) Proprietor: RFT S.p.A., 10121 Torino (IT)
(72) Inventor: Bortolan, Adriano, 10100 Torino (IT)
(74) Representative: Plebani, Rinaldo

(56) References cited:
- EP-A- 0 032 988
- EP-A- 0 535 409
- FR-A- 2 695 973

## Description

The present invention concerns a stem guide and seal unit, particularly for a shock absorber stem and especially a guide and seal unit for a stem of a motor vehicle shock absorber piston.

Shock absorbers are widely used for motor cars, and in relation to motor vehicles generally, to absorb the violent vibrations transmitted to the vehicle body from an uneven road.

A widely used type of shock absorber is an oil shock absorber, essentially comprising a cylinder, attached to the axle of a wheel and containing chambers and valves for the oil, and a piston which is slidable within the cylinder and attached to the vehicle body by a stem. During operation, the stem is subjected to continuous, very rapid and irregular, axial oscillations with respect to the cylinder.

A serious problem which therefore constantly faces shock absorber manufacturers is that of providing a perfect guide and seal for the stem where it projects from the cylinder.

One system for guiding and creating the seal for the stem of a shock absorber piston currently known in the art comprises a sintered metal bush fixed to the end of the cylinder; on the sintered bush there are mounted, in order from the inside to the outside of the cylinder, a metal ring for protecting the fixed end of the sintered bush, a low friction Glicodur (Registered Trade Mark) bush associated with a PTFE ring (TEFLON - Registered Trade Mark) disposed in a seat within the sintered bush through which the stem slides, and a gasket which is mounted on the sintered bush and constituted by an inner sealing ring and an outer ring having a dust guard lip.

However this known seal and guide system has disadvantages in that the sintered bush and the external gasket must be mounted separately, one after the other, therefore requiring a relatively long assembly time; the sintered bush is also generally expensive and fairly heavy; finally, the management of two components, that is the bush and the gasket, which must be mounted separately makes the acquisition, transport and storage of the components themselves more troublesome.

Another known stem guide and seal unit (EP-A-0 535 409) according to the first part of claim 1 shows similar disadvantages and particularly results in a large dimension, low strength and rigidily and heavy weight.

The object of the invention is therefore to provide a stem guide and seal system for a vehicle shock absorber piston which is easily constructed from a very small number of component parts, which is of a limited weight and size and which is quickly and easily assembled.

Another object of the invention is to provide a stem seal and guide system for the stem of a vehicle shock absorber piston, which is constructed in such a way as to be easily preassembled and subsequently assembled automatically on the shock absorber.

According to the present invention, therefore, there is provided a stem guide and seal unit, particularly for a stem of a shock absorber of the type defined in claim 1.

According to another characteristic of the invention, the hollow structure comprises a first sheet-metal ring pressed as a half-shell fitted on to an outer peripheral surface of the bush, the shape of the half-shell in section being substantially that of an inverted "U", and a second sheet-metal ring, pressed as a half-shell, fitted against a shoulder of the bush and juxtaposed against the first half-shell to form a toroidal box-structure.

In order to keep the two half-shells which form the box-structure in their correct positions, use is made of a sealing gasket provided with a reinforcing element in the form of an inverted cup, a cylindrical portion of which surrounds the box-structure and keeps it pressed against the shoulder of the bush while a flat portion overlies the box-structure.

Therefore, the system comprising the bush, the box-structure mounted on the bush and the gasket provided with the clamping reinforcing element, forms a complete and self-contained unit which, once it has been pre-assembled, remains assembled with such a force as to enable it to be handled and, once it has been attached to the end of the shock absorber cylinder by means of a single assembly operation, is held together permanently by the bending over of an end edge portion of the external container.

The advantages of the guide and seal unit according to the present invention are therefore obvious when compared with the known devices of the prior art; in the first place, the constructional simplicity of the component elements allows automated industrial techniques to be used for their assembly, which is therefore faster and more economical; in addition, the presence of the box-structure allows an object to be made lighter for a given rigidity and strength and this is therefore easily handled and transported; finally, the total cost of the unit when mounted, for example, on a shock absorber, is very much reduced.

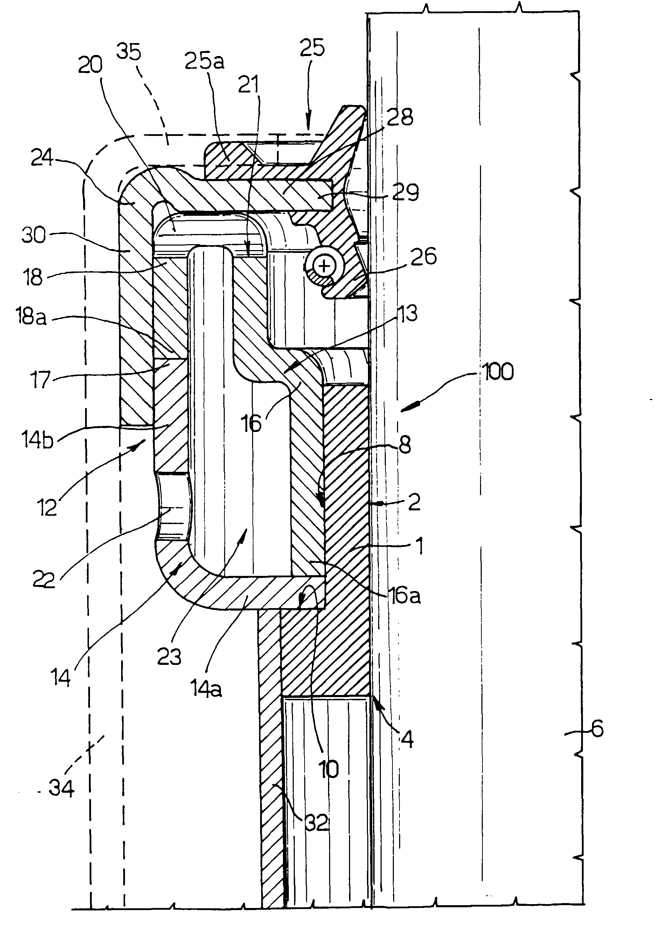

This and other characteristics and advantages of the stem guide and seal unit will become clearer from the following description of a preferred embodiment, given by way of non-limitative example with reference to the accompanying drawing which is an axial section of part of the unit of the invention mounted on the end of a cylinder, for example, of a vehicle shock absorber.

With reference to the above drawing, the reference numeral 1 indicates an annular guide bush made from a material having a low coefficient of friction, for example a polytetrafluoroethylene such as TEFLON (Registered Trade Mark) bounded by a cylindrical surface 2 defining an axial through-hole 4 slidingly engageable in use by a stem 6 which usually, but not exclusively, is driven to reciprocate axially. The bush 1 is bounded radially on its outer periphery by a cylindrical seat 8 terminating in an axial shoulder 10, and by a second cylindrical abutment or seat 9, having a greater diameter than the seat 8, which is formed immediately beyond the shoulder 10 and which, as will be described below, allows the bush 1 to be mounted on the end of a cylinder of a vehicle shock absorber.

A rigid, hollow structure 12 formed from two separate, rigid half-shells is mounted on the seat 8 in abutment with the shoulder 10, the half-shells being formed separately and then mounted juxtaposed on the bush 1; the half-shells, once joined together, define within them a toroidal cavity 23. The first, upper half-shell is constituted by a pressed sheet-metal ring 13 having, essentially, an inverted "U" shape in radial section (and in axial orientation); the inverted "U" shape of the ring 13 is obtained by pressing and comprises an outer turned cuff 18 formed by an edge portion which is bent axially downwards, this cuff being connected integrally with a substantially cylindrical part 16 which is formed in such a way as to be a force fit on the seat 8 of the bush 1; the outer cuff 18 is disposed on a circle of greater diameter than that of the part 16; the second, lower half-shell is constituted by a metal ring 14, for example of pressed sheet metal, having a suitable shape in radial section and in axial orientation (illustrated as an "L"-shape in the example) so that the second half-shell 14 can be juxtaposed exactly against the ring 13 in order to define the said hollow structure 12 which therefore constitutes a toroidal box; in general, the axial lengths of the cylindrical part 16 and the turned cuff 18 and the shape of the ring 14 can vary on condition, however, that the rings 13 and 14 can always be juxtaposed exactly to define the hollow box shape of the structure 12.

More particularly, in the preferred, non-limitative embodiment, the cylindrical part 16 and the turned cuff 18 have different axial lengths, more precisely the cylindrical part 16 is longer than the outer cuff 18; consequently, the ring 14 has, in section, a cup shape composed of a flat part 14a mounted on the seat 8 between the shoulder 10 and a lower edge 16a of the cylindrical part 16; the flat part 14a is bent axially upwards to continue with a cylindrical part 14b which extends until an upper edge 17 thereof mates edge-to-edge with an edge 18a of the outer turned cuff 18; in this way the correct juxtapositioning of the two rings 13 and 14 is achieved. An upper curved portion 20, joining the cylindrical part 16 to the cuff 18, has slots 21 to facilitate the bending, these being used, when necessary, together with peripheral holes 22 in the ring 14, to allow air (or of a working fluid) in the internal cavity 23 to circulate freely between the structure 12 and the stem 6, in use.

Obviously, according to one possible variant which is not illustrated for simplicity, the ring 13 can be pressed with the cylindrical part 16 and the cuff 18 having the same axial length; consequently, the ring 14 would be a flat disc fitted in the seat 8, abutting the shoulder 10 and positioned so as to close the open ends of the ring 13. Analogously, in another variant, the ring 13 can have any open shape in axial section and the ring 14 can have a complementary open shape in section such that, when the two rings are juxtaposed concentrically on the bush 1, a hollow box-structure is obtained.

The box-structure 12 is held together, before it is mounted on the bush 1, by means of an inverted bowl-shape reinforcing element 24 which is fitted on to the top of the structure 12, at the opposite end from the bush 1, so as to hold both of the rings 13, 14 contemporaneously. The reinforcing element 24, made from pressed sheet metal, forms part of an annular sealing gasket 25, of known type, which can cooperate slidingly with the stem 6; consequently, the bush 1, the structure 12 and the gasket 25, once mutually coupled, define a preassembled guide and seal unit through which, in use, the stem 6 is intended to pass.

The gasket 25, as well as the reinforcing element 24, includes an elastomeric sealing element 25a which is vulcanized to the reinforcing element 24 and which includes a first radial annular lip 26 facing the bush 1 as illustrated in the drawing, and a second radial annular lip 27 projecting away from the lip 26 and formed integrally with it; the ring or annular lip 26, which functions as an oil seal, is preferably provided with a toroidal spring which is fitted radially around the outside thereof and which, in use, increases its contact pressure against the external peripheral surface of the stem 6, while the ring or lip 27 is essentially a dust seal which cooperates slidingly with that part of the stem 6 nearer the outside of the shock absorber in order to protect the seal 26.

The reinforcing element 24 is constituted by a flat radial part 28, which carries the sealing element 25a on an internal circular edge portion 29, and a cylindrical part 30 bent at approximately 90° to the part 28 and extending without discontinuity from this latter; the cylindrical part 30 is fitted with a slight radial interference around the outside of the structure 12 and extends axially so as to cover the junction between the cuff 18 and the part 14b of the ring 14. In this way the box-structure 12, even though it is formed from two separate elements which are merely juxtaposed against each other, is strengthened and held on the bush 1 by the reinforcing element 24.

Therefore the combination of the bush 1, the box-structure 12 and the gasket 25 form a unit, indicated by the reference numeral 100 in the drawing, which is self-supporting in that it is assembled with sufficient force to be able to withstand the stresses of handling during storage and subsequent assembly into the working position, without any risk of the component parts coming apart.

In the drawing, a non-limitative example of use of the guide and seal unit 100 of the invention for sliding stems of motor vehicle shock absorbers is illustrated. With reference to the drawing, the second seat 9 of the bush 1, which is not covered by the structure 12, is force fitted into the opening of a cylinder 32 within a known shock absorber, the rest of which is not illustrated for simplicity. The cylinder 32 is mounted in a known way within a container or body, of which only an upper part 34 is shown in broken lines for simplicity of the drawing; the container 34 peripherally surrounds the reinforcing element 24 which, in use, is firmly held by an edge portion 35 of the container 34, which is bent over the radial part 28 of the reinforcing element 24 after the unit 100 has been introduced into the container 34; the axial position of the unit 100 is defined by the part 14a of the ring 14, which is in axial contact with the upper edge of the cylinder 32 which acts as a shoulder for the entire unit 100 which, after the edge portion 35 has been bent over, thus remains clamped together, between this latter and the cylinder 32. This prevents any possibility of the reinforcing element 24 slipping off the structure 12, or of this coming off the bush 1, and therefore ensures the definitive and stable assembly of the unit 1.

From what has been described it will be understood that modifications to the shape of the stem guide and seal unit of the present invention or addition or replacement of parts thereof can be made without departing from the scope of the invention, as in the following Claims.

## Claims

1. A stem guide and seal unit, particularly for a stem (6) of a shock absorber of the type comprising a cylinder (32) within which the said stem (6) slides, and an external container (34) which carries the said cylinder, the said unit including a bush (1) mounted on the said cylinder (32) and adapted to guide the said stem (6) with precision, and a rigid annular element (12) which is firmly mounted on the said bush (1) to connect the bush (1) to the container (34), the said rigid element comprising a toroidal hollow box-structure (12, 13, 14) which is fitted on to a radially outer seat (8) of the said bush (1) and which comprises in turn a first and a second rigid half-shells (12, 13) having a substantially toroidal shape;
characterised in that:
- the said seat (8) of the bush (1) is provided with an axial shoulder (10);
- the said first half-shell (13) is constituted by a cylindrical part (16) fitted on to the said bush (1) and a bent edge portion (18, 18a) which is disposed outside and, in an axial direction, on a circle of greater diameter than the diameter of the said cylindrical part (16);
- the said second half-shell (14) comprises a flat, annular part (14a) mounted on the said seat (8) and axially interposed between the said first half-shell (13) and the said shoulder (10) of the bush (1);
- the said second rigid half-shell (14) is juxtaposed axially against the said first half-shell (13) to form the said hollow box-structure: the said cylindrical part (16) and the said bent edge portion (18, 18a) of the said first half-shell (13) extending axially until they mate end-to-end their own edges abutting respective edges of the said second half-shell (14).

2. A guide and seal unit for a stem (6) according to Claim 1, characterised in that said second half-shell (14) further comprises a cylindrical part (14b) integral with the said annular part (14a) and bent at 90° thereto on the opposite side from the said seat (8), the cylindrical part (14b) extending axially until it mates end-to-end with its own edge (17) abutting an edge (18a) of the said bent edge portion (18) of the said first half-shell (13).

3. A guide and seal unit for a stem according to Claim 2, characterised in that the said half-shells include lightening holes (21, 22) to allow the possible circulation of fluid between the said stem (6) and the said box-structure (12).

4. A guide and seal unit for a stem according to any of Claims 1 to 3, characterised in that the said half-shells (13, 14) are made from pressed sheet metal.

5. A guide and seal unit for a stem according to any of the Claims 1 to 4, characterised in that it further includes a sliding sealing gasket (25) for the said stem (6), the gasket (25) including a reinforcing element (24) fitted radially around the outside of the said hollow box-structure (12) on the opposite side from the said bush (1); the said reinforcing element (24) being capable of being fixed within the said external container (34) by the bending over of one of its edges (35).

6. A guide and seal unit for a stem according to Claim 5, characterised in that the said reinforcing element (24) is constituted by a preformed pressed sheet metal element comprising a flat annular part (28), coaxial with and adjacent the said hollow structure (12), and an integral cylindrical part (30) fitted around a peripheral face of the said structure (12) and firmly mounted within the said container (34), the said cylindrical part (30) extending axially so as to cover respective juxtaposed, cooperating edges (17, 18a) of the said half-shells (13, 14).

7. A guide and seal unit for a stem according to Claim 6, characterised in that the said flat annular part (28) supports an elastomeric sliding seal element (25a) of the said gasket (25) which cooperates with the said stem (6) and includes a first annular lip (26) for forming an oil seal and a second annular lip (27) for forming a dust seal facing in the opposite direction from the first one.

8. A guide and seal unit for a stem according to any of the preceding Claims, characterised in that the said bush (1) is made from a material having a low coefficient of friction, preferably PTFE.

## Patentansprüche

1. Führungs- und Abdichtungseinheit für eine Stange, insbesondere für eine Stange (6) eines Stoßdämpfers jener Art, die einen Zylinder (32), in dem die Stange (6) gleitet, und einen externen Behälter (34), der den Zylinder trägt, umfaßt, wobei die Einheit eine an dem Zylinder (32) angebrachte Buchse (1), die zur genauen Führung der Stange (6) ausgeführt ist, und ein starres ringförmiges Element (12), das an der Buchse (1) fest angebracht ist und letztere (1) mit dem Behälter (34) verbindet, enthält, wobei das -starre Element eine toroidale hohle Kastenkonstruktion (12, 13, 14) umfaßt, die an einem radial äußeren Sitz (8) der Buchse (1) angebracht ist und wiederum eine erste und eine zweite starre Halbschale (12, 13) mit einer im wesentlichen toroidalen Form umfaßt;
dadurch gekennzeichnet, daß
- der Sitz (8) der Buchse (1) mit einer axialen Schulter (10) versehen ist;
- die erste Halbschale (13) aus einem an der Buchse (1) angebrachten zylindrischen Teil (16) und einem gebogenen Randteil (18, 18a), der außerhalb und in einer Axialrichtung auf einem Kreis mit einem größeren Durchmesser als der Durchmesser des zylindrischen Teils (16) angeordnet ist, besteht;
- die zweite Halbschale (14) einen flachen, ringförmigen Teil (14a) umfaßt, der an dem Sitz (8) angebracht und axial zwischen der ersten Halbschale (13) und der Schulter (10) der Buchse (1) angeordnet ist;
- die zweite starre Halbschale (14) axial so an die erste Halbschale (13) angrenzend angeordnet ist, daß die hohle Kastenkonstruktion gebildet wird, wobei sich der zylindrische Teil (16) und der gebogene Randteil (18, 18a) der ersten Halbschale (13) axial so weit erstrecken, bis sie endseitig zusammentreffen, wobei ihre eigenen Ränder an jeweilige Ränder der zweiten Halbschale (14) anstoßen.

2. Führungs- und Abdichtungseinheit für eine Stange (6) nach Anspruch 1, dadurch gekennzeichnet, daß die zweite Halbschale (14) weiterhin einen zylindrischen Teil (14b) umfaßt, der mit dem ringförmigen Teil (14a) integral ausgebildet und zu diesem auf der gegenüberliegenden Seite von dem Sitz (8) in einem Winkel von 90° gebogen ist, wobei sich der zylindrische Teil (14b) axial so weit erstreckt, bis er endseitig mit seinem eigenen Rand (17) an einem Rand (18a) des gebogenen Randteils (18) der ersten Halbschale (13) anstoßend zusammentrifft.

3. Führungs- und Abdichtungseinheit für eine Stange nach Anspruch 2, dadurch gekennzeichnet, daß die Halbschalen Erleichterungslöcher (21, 22) enthalten, damit gegebenenfalls die Zirkulation von Fluid zwischen der Stange (6) und der Kastenkonstruktion (12) gestattet wird.

4. Führungs- und Abdichtungseinheit für eine Stange nach einem der Ansprüche 1 bis 3, dadurch gekennzeichnet, daß die Halbschalen (13, 14) aus Preßblech hergestellt sind.

5. Führungs- und Abdichtungseinheit für eine Stange nach einem der Ansprüche 1 bis 4, dadurch gekennzeichnet, daß sie weiterhin eine Gleitdichtung (25) für die Stange (6) enthält, wobei die Dichtung (25) ein Verstärkungselement (24) enthält, das radial um die Außenseite der hohlen Kastenkonstruktion (12) herum auf der gegenüberliegenden Seite von der Buchse (1) angebracht ist; wobei das Verstärkungselement (24) durch Umbiegen eines seiner Ränder (35) in dem externen Behälter (34) befestigt werden kann.

6. Führungs- und Abdichtungseinheit für eine Stange nach Anspruch 5, dadurch gekennzeichnet, daß das Verstärkungselement (24) aus einem vorgeformten Preßblechelement besteht, das einen flachen ringförmigen Teil (28), der koaxial mit der hohlen Konstruktion (12) und daneben angeordnet ist, und einen integralen zylindrischen Teil (30), der um eine Umfangsfläche der Konstruktion (12) herum angeordnet und in dem Behälter (34) fest angebracht ist, umfaßt, wobei sich der zylindrische Teil (30) axial so erstreckt, daß er jeweilige, aneinander angrenzende, zusammenwirkende Ränder (17, 18a) der Halbschalen (13, 14) bedeckt.

7. Führungs- und Abdichtungseinheit für eine Stange nach Anspruch 6, dadurch gekennzeichnet, daß der flache ringförmige Teil (28) ein elastomeres Gleitdichtungselement (25a) der Dichtung (25) stützt, das mit der Stange (6) zusammenwirkt und eine erste ringförmige Lippe (26) zur Bildung einer Öldichtung und eine zweite ringförmige Lippe (27) zur Bildung einer Staubdichtung, die in die entgegengesetzte Richtung als die erste weist, enthält.

8. Führungs- und Abdichtungseinheit für eine Stange nach einem der vorhergehenden Ansprüche, dadurch gekennzeichnet, daß die Buchse (1) aus einem Material mit einem geringen Reibungskoeffizienten, vorzugsweise PTFE, besteht.

## Revendications

1. Un bloc de guidage et de joint pour une tige, en particulier pour une tige (6) d'amortisseur du type comprenant un cylindre (32) à l'intérieur duquel coulisse ladite tige (6), et un récipient extérieur (34) qui supporte ledit cylindre, ledit système comprenant une douille (1) montée sur ledit cylindre (32) et adapté pour guider ladite tige (6) avec précision, et un élément annulaire rigide (12) qui est solidement monté sur ladite douille (1) pour raccorder la douille (1) au récipient (34), ledit élément rigide comprenant une structure en forme de boîte creuse toroïdale (12, 13, 14) qui est ajustée sur un siège (8) radialement extérieur de ladite douille (1) et qui comprend à son tour des première et seconde demi-coques rigides (12, 13) ayant une forme sensiblement toroïdale;
caractérisé en ce que:
- ledit siège (8) de la douille (1) est muni d'un épaulement axial (10);
- ladite première demi-coque (13) est constituée par une partie cylindrique (16) ajustée sur ladite douille (1) et une partie de bord courbée (18, 18a) qui est disposée à l'extérieur et, dans une direction axiale, sur un cercle de diamètre supérieur au diamètre de ladite partie cylindrique (16);
- ladite seconde demi-coque (14) comprend une partie annulaire plate (14a) montée sur ledit siège (8) et axialement intercalée entre ladite première demi-coque (13) et ledit épaulement (10) de la douille (1);
- ladite seconde demi-coque rigide (14) est juxtaposée axialement contre ladite première demi-coque (13) pour former ladite structure en forme de boîte creuse: ladite partie cylindrique (16) et ladite partie de bord courbée (18, 18a) de ladite première demi-coque (13) s'étendant axialement jusqu'à ce qu'elles viennent bord à bord avec leurs propres bords qui viennent en butée avec les bords respectifs de ladite seconde demi-coque (14).

2. Un bloc de guidage et de joint pour une tige (6) selon la revendication 1, caractérisé en ce que ladite seconde demi-coque (14) comprend en outre une partie cylindrique (14b) formant un seul tenant avec ladite partie annulaire (14a) et courbée à 90° par rapport à celle-ci sur le côté opposé dudit siège (8), la partie cylindrique (14b) s'étendant axialement jusqu'à ce qu'elle vienne bord à bord avec son propre bord (17) qui vient en butée contre un bord (18a) de ladite partie de bord courbée (18) de ladite première demi-coque (13).

3. Un bloc de guidage et de joint pour une tige selon la revendication 2, caractérisé en ce que lesdites demi-coques comprennent des trous d'ouverture (21, 22) pour permettre la circulation possible de fluide entre ladite tige (6) et ladite structure en forme de boîte (12).

4. Un bloc de guidage et de joint pour une tige selon l'une quelconque des revendications 1 à 3, caractérisé en ce que lesdites demi-coques (13, 14) sont fabriquées à partir de tôle emboutie.

5. Un bloc de guidage et de joint pour une tige selon l'une quelconque des revendications 1 à 4, caractérisé en ce qu'ils comprennent en outre un joint d'étanchéité coulissant (25) pour ladite tige (6), le joint (25) comprenant un élément de renfort (24) ajusté radialement autour de la partie extérieure de ladite structure en forme de boîte creuse (12) sur le côté opposé depuis ladite douille (1); ledit élément de renfort (24) pouvant être fixé à l'intérieur dudit récipient extérieur (34) par la courbure sur un de ses bords (35).

6. Un bloc de guidage et de joint pour une tige selon la revendication 5, caractérisé en ce que ledit élément de renfort (24) est constitué par un élément en tôle emboutie préformé comprenant une partie annulaire plate (28), coaxiale avec et adjacente à ladite structure creuse (12), et une partie cylindrique d'un seul tenant (30) ajustée autour d'une face périphérique de ladite structure (12) et solidement montée à l'intérieur dudit récipient (34), ladite partie cylindrique (30) s'étendant axialement de manière à recouvrir les bords coopérants juxtaposés (17, 18a) respectifs desdites demi-coques (13, 14).

7. Un bloc de guidage et de joint pour une tige selon la revendication 6, caractérisé en ce que ladite partie annulaire plate (28) supporte un élément d'étanchéité coulissant élastomère (25a) dudit joint (25) qui coopère avec ladite tige (6) et comprend une première lèvre annulaire (26) pour former un joint étanche à l'huile et une seconde lèvre annulaire (27) pour former un joint étanche à la poussière tourné dans la direction opposée à la première.

8. Un bloc de guidage et de joint pour une tige selon l'une quelconque des revendications précédentes, caractérisé en ce que ladite douille (1) est fabriquée dans un matériau ayant un faible coefficient de frottement, de préférence le PTFE.
